**Europäisches Patentamt**

**European Patent Office**

**Office européen des brevets**

(19)

(11) Numéro de publication: **0 003 091**
**B1**

## (12) FASCICULE DE BREVET EUROPEEN

(45) Date de publication du fascicule de brevet: **14.10.81**

(51) Int. Cl.³: **F 16 J 15/06, F 16 L 23/00**

(21) Numéro de dépôt: **78400269.3**

(22) Date de dépôt: **29.12.78**

(54) Joint annulaire.

(30) Priorité: **06.01.78 FR 7800290**
**25.05.78 FR 7815555**

(43) Date de publication de la demande:
**25.07.79 Bulletin 79/15**

(45) Mention de la délivrance du brevet:
**14.10.81 Bulletin 81/41**

(84) Etats Contractants Désignés:
**BE CH DE GB IT NL SE**

(56) Documents cités:
**FR - A - 386 149**
**FR - A - 1 325 081**
**FR - A - 1 592 635**
**FR - A - 2 119 258**
**FR - A - 2 232 235**
**US - A - 2 766 614**
**US - A - 3 141 685**

(73) Titulaire: **COMMISSARIAT A L'ENERGIE**
**ATOMIQUE Etablissement de Caractère**
**Scientifique Technique et Industriel**
**B.P. 510**
**F-75752 Paris Cedex 15 (FR)**

(72) Inventeur: **Abbes, Claude**
**5, Montée de Crêt du Loup**
**F-42100 Saint Etienne (FR)**
Inventeur: **Gournier, André**
**1, rue Carnot**
**F-42270 Saint Priest en Jarez (FR)**
Inventeur: **Rouaud, Christian**
**Lotissement des Genêts**
**F-07700 Bourg Saint Andeol (FR)**
Inventeur: **Villepoix, Raymond de**
**"La Chatelière"**
**F-26290 Donzere (FR)**

(74) Mandataire: **Mongredien, André et al,**
**c/o Brevatome 25, rue de Ponthieu**
**F-75008 Paris (FR)**

Courier Press, Leamington Spa, England.

Joint annulaire

La présente invention est relative à un joint annulaire flexible métalloplastique comportant, de façon connue, une âme interne formée d'un ressort métallique à spires jointives fermé sur lui-même, à section droite circulaire, entourée au moins partiellement de deux enveloppes métalliques successives, à savoir une première enveloppe métallique non ductile dans laquelle est encastré le ressort et une deuxième enveloppe métallique ductile située autour de la première.

Dans un mode de réalisation particulier d'un tel joint annulaire, notamment décrit et revendiqué dans le brevet français numéro 2 151 186 au nom du Commissariat à l'Energie Atomique, la deuxième enveloppe, en metal ductile, entoure partiellement la première enveloppe. Ces deux enveloppes présentent en section droite la forme d'un C, le joint pouvant avoir un contour quelconque, notamment en forme de tore de révolution ou présentant des côtés rectilignes réunis par des parties curvilignes. De préférence, le ressort constituant l'âme interne du joint est réalisé en acier, la première enveloppe en acier doux et la seconde enveloppe en aluminium.

Selon divers perfectionnements aux joints annulaires ci-dessus, notamment décrits et revendiqués dans les certificats d'addition numéro 2 224 029 et numéro 2 232 235 au brevet principal, la deuxième enveloppe, en métal ductile, peut être elle-même revêtue dans sa surface externe d'un revêtement d'un matériau à faible coefficient de frottement, tel que du polytétrafluoroéthylène ("Téflon"), le ressort interne étant en outre associé à un jonc métallique rigide, limitant l'écrasement de ce ressort, ce jonc continu ou discontinu étant disposé à l'intérieur ou à l'extérieur de ce dernier.

Au titre de l'art antérieur connu, on peut encore citer les brevets français 2 119 258 et américain 3 141 685.

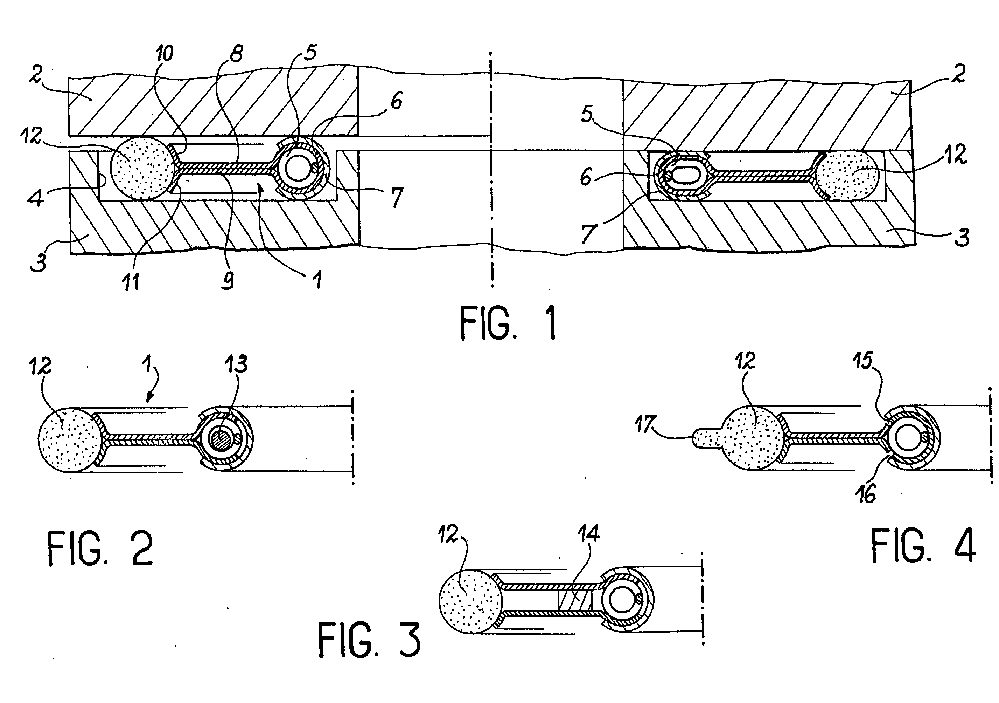

Le brevet français 2 119 258 décrit en effet un joint comportant un élément métallique déformable creux 1, à l'intérieur duquel on place un ressort spiralé en acier 6 pour augmenter la résistance élastique du joint aux déformations que celui-ci subit lors des serrages et desserrages consécutifs. Dans le mode de réalisation particulier de la Fig. 2, le joint est double et constitué de deux anneaux concentriques ayant chacun son ressort spiralé interne (6 et 16) et recouverts d'une enveloppe métallique commune présentant une jonction plane 8 soudée en 13 et 14 dans le plan équatorial du joint. On remarquera toutefois que les ressorts spiralés 6 et 16 ne sont entourés que d'une seule enveloppe métallique déformable, ce qui ne permet pas d'obtenir les qualités d'étanchéité résultant des joints à double enveloppe dont l'une est dure et l'autre ductile FR—A 2.151.186, 2.224.029 et 2.232.235); de plus et surtout, ce joint entièrement métallique, ne permet pas le perçage de l'un des anneaux pour prélever des échantillons de l'atmosphère existant entre les deux anneaux et les brides des pièces à étancher, en faire l'analyse et surveiller la qualité de l'étanchéité maintenue par le joint.

Dans l'US—A—3,141,685, on décrit un joint métallique à deux doubles lèvres annulaires externes (36 et 38, Fig. 2) et internes (44 et 46). Ces deux doubles lèvres délimitent avec les pièces à étancher 10 et 12 deux chambres de pression internes 80 et 82, reliées par un passage 84 et communiquant par un conduit avec l'extérieur au travers d'un dispositif de mesure de la pression. Selon les cas, les chambres internes 80 et 82 sont mises en pression ou en dépression par rapport à l'extérieur pour augmenter la sécurité et l'efficacité de l'étanchéité du joint utilisé dans un autoclave. Une telle réalisation, sans rapport de conception avec le joint annulaire double de la présente invention, montre toutefois la possibilité d'établir une liaison pneumatique entre la chambre d'étanchéité du joint et l'extérieur et de contrôler l'efficacité du joint. Or, dans certains domaines de pointe, comme la chimie des corps très toxiques ou agressifs, un tel contrôle permanent peut constituer une nécessité majeure.

La présente invention concerne un perfectionnement apporté à un joint annulaire flexible composite du genre ci-dessus, ce perfectionnement permettant principalement d'isoler le joint lui-même due milieu ambiant externe, tout en offrant la possibilité de contrôler l'étanchéité réalisée.

A cet effet, le joint considéré, comportant, de façon connue, une âme interne formée d'un ressort métallique à spires jointives fermé sur lui-même, à section droite circulaire, entourée au moins partiellement de deux enveloppes métalliques se caractérise en ce qu'il comprend en outre un anneau plastique plein en élastomère coaxial à l'âme interne relié à celle-ci par deux faces métalliques planes et parallèles s'étendant dans le plan équatorial transversal de symétrie du joint et présentant des épanouissements d'extrémités entourant partiellement l'anneau plastique et au moins partiellement l'âme, de façon à créer entre l'anneau et l'âme lors de sa mise en place entre deux pièces à étancher une enceinte étanche de faible volume utilisable pour contrôler l'étanchéité du joint, des moyens traversant l'anneau en élastomère et communiquant avec l'enceinte étanche étant prévus pour contrôler depuis l'extérieur du joint la pression régnant dans cette enceinte.

Selon le cas, l'enveloppe entourant le ressort interne est directement raccordée aux deux faces planes parallèles, ou bien comporte des discontinuités au raccordement avec ces faces planes.

En permettant de réaliser une double étanchéité selon deux lignes circonférentielles concentriques, le joint métalloplastique selon l'invention assure la possibilité d'un contrôle permanent de l'étanchéité dans l'espace délimité entre l'anneau plein en élastomère d'une part, et l'enveloppe métallique entourant le ressort interne d'autre part, ledit espace constituant ainsi une enceinte de contrôle de l'étanchéité.

A cet effet, le joint de l'invention peut, dans des réalisations spécialement avantageuses, comporter au moins un tube capillaire transversal, qui traverse l'anneau en élastomère et un épanouissement d'une des faces planes prolongeant l'enveloppe entourant le ressort interne, ledit tube capillaire débouchant dans une lumière ménagée dans ladite face.

Grâce à la mise en place d'un tel tube capillaire, le joint composite selon l'invention est directement muni d'un organe de détection, permettant de contrôler à tout moment la qualité de l'atmosphère, notamment du vide, régnant dans l'espace compris entre l'anneau et l'enveloppe en appui contre les parois ou surfaces entre lesquelles est réalisée l'étanchéité par le joint.

Selon une caractéristique particulière, le tube capillaire traverse sensiblement diamétralement l'anneau en élastomère par un perçage dont le diamètre est légèrement inférieur à celui du tube, afin de réaliser l'étanchéité de cette traversée. Par ailleurs, le tube capillaire est avantageusement solidarisé de l'épanouissement qu'il traverse par un point de soudure.

D'autres caractéristiques d'un joint annulaire flexible selon l'invention apparaîtront encore à travers la description qui suit de plusieurs exemples de réalisation donnés à titre indicatif et non limitatif, en référence au dessin annexé sur lequel:

La fig. 1 est une vue schématique en coupe transversale d'un joint annulaire selon l'invention, représenté monté dans une gorge ménagée entre deux surfaces d'appui entre lesquelles il réalise l'étanchéité, ce joint étant représenté dans la partie gauche du dessin avant application des pièces l'une contre l'autre, et dans la partie droite une fois les pièces en contact avec écrasement partiel du joint;

Les fig. 2, 3 et 4 illustrent diverses variantes de réalisation du joint annulaire flexible considéré;

La fig. 5 est une vue schématique en coupe transversale d'un joint annulaire selon l'invention, représenté monté dans une gorge ménagée entre deux surfaces d'appui et muni de son dispositif de contrôle de l'étanchéité;

La fig. 6 est une vue partielle et de dessus d'une partie du joint de la fig. 5, les surfaces d'appui étant enlevées.

Dans l'exemple de réalisation représenté sur la vue en coupe de la fig. 1, le joint annulaire considéré, désigné dans son ensemble par la référence 1, est prévu pour être monté et assurer l'étanchéité entre deux pièces, respectivement 2 et 3, en étant logé à l'intérieur d'une gorge 4 de la pièce 3 par exemple, cette gorge étant ouverte en direction de la pièce 2. Sur la figure, la vue en coupe située à gauche représente les deux pièces 2 et 3 écartées l'une de l'autre, le joint 1 monté dans la gorge 4 n'étant pas écrasé entre ces pièces. En revanche, sur la vue en coupe à droite, les pièces 2 et 3 sont appliquées l'une contre l'autre, le joint 1 étant partiellement écrasé entre elles. Le joint 1 se présente sous la forme d'un double anneau torique qui, dans l'exemple de réalisation représenté, est supposé de révolution autour de l'axe commun des pièces 2 et 3, schématisé en traits mixtes sur le dessin. Bien entendu, d'autres profils du joint pourraient être utilisés, toujours avec l'âme et l'anneau plastique fermés sur eux-mêmes, comportant des côtés rectilignes raccordés par des parties curvilignes ou autres.

Le premier anneau métallique du joint 1 se compose principalement d'une âme interne, formée d'un ressort hélicoïdal 5 à spires jointives, de préférence en acier, fermé sur lui-même. Le ressort 5 est entouré par une première enveloppe métallique 6 en un métal peu ductile, par exemple en acier doux, elle-même entourée par une seconde enveloppe 7, en un métal plus ductile, par exemple en cuivre ou en aluminium, apte à venir en contact avec les surfaces en regard des pièces 2 et 3 contre lesquelles s'applique le joint.

Selon l'invention, l'enveloppe interne 6 dans laquelle est encastré le ressort 5 se prolonge par deux faces planes, respectivement 8 et 9, disposées sensiblement de part et d'autre d'un plan équatorial de symétrie du joint 1. Ces faces 8 et 9 se prolongent jusqu'à une certaine distance à l'opposé du ressort 5 pour se terminer par deux épanouissements, respectivement 10 et 11, aptes à venir en contact avec un anneau plein 12, réalisé en un matériau élastomère approprié, par exemple en caoutchouc, et constituant le deuxième anneau du joint 1. Les faces 8 et 9 réalisent ainsi, entre l'anneau en élastomère 12 et l'anneau métallique formé du ressort 5 et de ses enveloppes 6 et 7, une armature de liaison s'étendant sur une distance convenable. Les épanouissements 10 et 11 terminant les faces planes 8 et 9 déterminent l'amorce d'un secteur de cercle dont la corde est au plus égale à l'épaisseur de l'anneau élastomère. Ce dernier peut présenter une épaisseur supérieure ou égale à celle de l'ensemble formé par le ressort et ses enveloppes et peut être choisi parmi la plus large gamme des matériaux disponibles. Notamment, l'anneau 12 peut être réalisé d'une seule pièce ou formé d'éléments raccordés par tous procédés connus, tels que vulcanisation, collage, etc..., sans limitation de son diamètre nominal.

Les deux faces parallèles 8 et 9 prolongeant l'enveloppe 6 peuvent être solidarisées l'une de l'autre par points ou par d'autres procédés, notamment par un cordon de soudure continu, de manière à interdire tout cheminement de l'atmosphère entre ces faces.

Le joint composite selon l'invention présente ainsi l'avantage d'utiliser sans aucune modification importante le revêtement du ressort interne pour constituer en même temps un logement de mise en place d'un anneau en élastomère, celui-ci en doublant le joint métallique, réalisant un bouclier de protection vis-à-vis des contraintes thermiques ou chimiques du milieu par rapport auquel on réalise l'étanchéité. Par ailleurs, les faces parallèles prolongeant l'enveloppe permettent l'aménagement de sondes, aptes à contrôler l'étanchéité réalisée entre l'anneau en élastomère et le joint métallique.

Bien entendu, il va de soi que le perfectionnement considéré peut être utilisé quelle que soit la nature du logement recevant le joint composite, soit que celui-ci soit monté à l'intérieur d'une gorge telle que représentée sur la fig. 1, soit dans un assemblage à portées planes où la limitation de l'écrasement peut alors être assurée par un jonc métallique interne 13 (fig. 2) disposé à l'intérieur du ressort 5 ou bien par une butée externe 14 (fig. 3) montée à l'extérieur de ce dernier.

A titre de variante, on peut également prévoir que les faces parallèles 8 et 9 s'étendant dans le plan équatorial du joint, ne soient par directement réunies à l'enveloppe métallique 6 entourant le ressort 5, mais séparées de celle-ci par deux discontinuités telles que 15 et 16, comme illustré sur la fig. 4, ces discontinuités étant symétriques l'une de l'autre par rapport au plan de symétrie suivant un angle au centre voisin de 270°. Cette configuration est particulièrement favorable pour la réalisation de joints de forme non circulaire. Par ailleurs, et sur cette même figure, l'anneau en élastomère 12 est représenté avec une languette extérieure 17 située dans le plan équatorial du joint, cette languette permettant un meilleur centrage dans le cas d'assemblages à portées planes et assurant de ce fait une protection mécanique complémentaire du joint en élastomère.

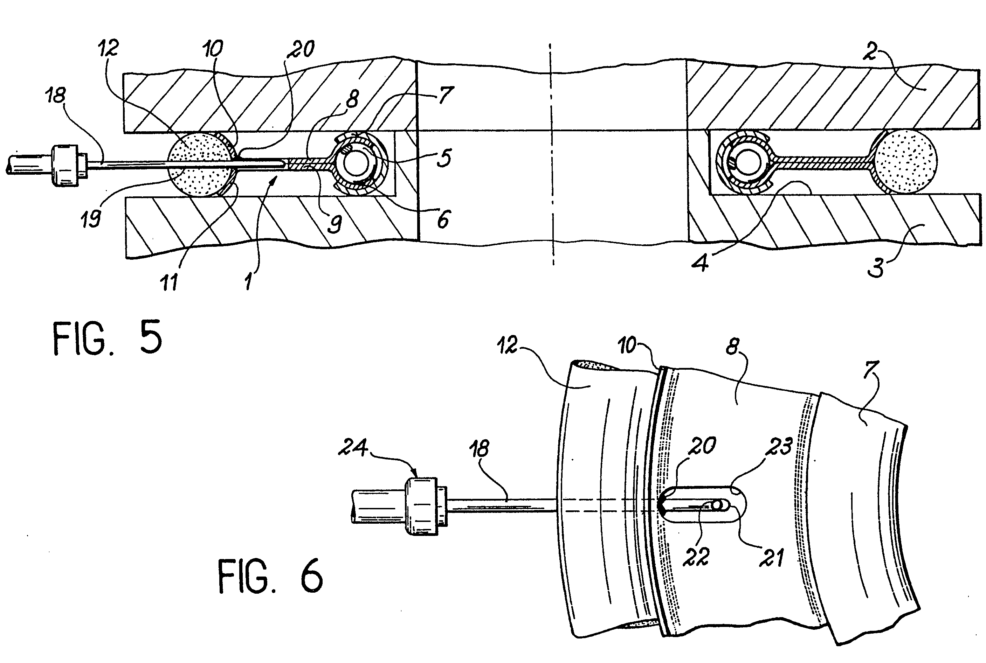

Sur la fig. 5 on retrouve la partie métallique du joint composite 1, comprenant une âme interne formée d'un ressort hélicoïdal 5 à spires jointives, de préférence en acier, fermé sur lui-même. Ce ressort 5 est entouré par une première enveloppe métallique 6, en un métal peu ductile, par exemple en acier doux, elle-même entourée par une seconde enveloppe 7, en un métal plus ductile, par exemple en cuivre ou en aluminium, apte à venir en contact avec les surfaces en regard de deux pièces 2 et 3 contre lesquelles s'appliquent le joint 1, ces pièces 2 et 3 délimitant entre elles une gorge 4 assurant le logement de ce joint.

L'enveloppe interne 6, dans laquelle est encastré le ressort 5, se prolonge par deux faces planes, respectivement 8 et 9, disposées sensiblement de part et d'autre d'un plan équatorial de symétrie du joint 1. Ces faces 8 et 9 s'étendent jusqu'à une certaine distance, à l'opposé du ressort 5, pour se terminer par deux épanouissements, respectivement 10 et 11, en contact avec un anneau plein 12, notamment réalisé en un matériau élastomère approprié par exemple en caoutchouc.

Conformément à l'invention, on prévoit d'aménager le joint composite 1 en lui adjoignant directement un moyen permettant d'effectuer en permanence le contrôle de l'atmosphère régnant à l'intérieur de la gorge 4, notamment entre les zones d'appui de l'enveloppe extérieure 7 et de l'anneau en élastomère 12 contre les faces 2 et 3. Dans ce but, on associe à l'anneau 12 un tube capillaire 18, monté de manière à traverser approximativement diamétralement cet anneau à travers un perçage 19 prévu dans ce dernier et dont la dimension diamétrale est sensiblement inférieure à celle du tube 18, de telle sorte que ce dernier puisse être engagé à force à travers l'anneau 12, le matériau élastique de celui-ci réalisant une étanchéité satisfaisante au passage du tube. Ce tube 18 se prolonge au-delà de l'anneau 12 et, dans l'exemple considéré, traverse l'épanouissement 10 prolongeant la face plane supérieure 8 de l'enveloppe 6, l'immobilisation du tube 18 par rapport au joint étant avantageusement réalisée par un point de soudure 20. L'extrémité 21 du tube 18 s'étend légèrement au-delà du point du soudure, de telle sorte que l'orifice 22 prévu en bout et sur les flancs du tube, se situe à l'intérieur d'une lumière 23 ménagée dans les faces planes 8 et 9. Le tube 18 peut ainsi prélever en permanence une fraction de l'atmosphère régnant dans la gorge 4 entre l'anneau 12 et l'enveloppe 7, une fois les surfaces 2 et 3 appliquées l'une contre l'autre. A son extrémité opposée, au-delà de l'anneau en élastomère 12, le tube capillaire 18 est réuni à un raccord 24, permettant de relier le tube à un appareil détecteur (non représenté), apte à contrôler l'étanchéité réalisée par le joint.

Le joint annulaire flexible métalloplastique selon l'invention comporte donc un système de détection qui lui est propre et qui permet, en permanence, de contrôler l'étanchéité réalisée, ce contrôle se faisant à l'extérieur du joint dans l'atmosphère ambiante par un appareil approprié, réuni à l'extrémité libre du tube capillaire. Cette disposition très intéressante permet d'obtenir une double étanchéité et surtout de réaliser, entre les deux anneaux métallique et plastique du joint, une enceinte de volume réduit dans laquelle on peut faire un test d'étanchéité sans qu'il soit nécessaire de réaliser le vide à l'intérieur ou à l'extérieur de la canalisation sur laquelle le joint est monté.

## Revendications

1. Joint annulaire flexible métalloplastique comportant une âme interne (5) formée d'un ressort métallique à spires jointives fermé sur lui-même, à section droite circulaire, entourée au moins partiellement de deux enveloppes métalliques successives, à savoir une première enveloppe métallique (6) non ductile dans laquelle est encastré le ressort (5) et une deuxième enveloppe métallique (7) ductile située autour de la première, caractérisé en ce qu'il comprend en outre un anneau plastique plein en élastomère (12), coaxial à l'âme interne (5) relié à celle-ci par deux faces métalliques planes et parallèles (8, 9) s'étendant dans le plan equatorial transversal de symétrie du joint et présentant des épanouissements d'extrémités entourant partiellement l'anneau plastique (12) et au moins partiellement l'âme (5), de façon à créer entre l'anneau (12) et l'âme (5) lors de sa mise en place entre deux pièces (2, 3) à étancher une enceinte étanche de faible volume utilisable pour contrôler l'etanchéité du joint, des moyens (18) traversant l'anneau en élastomère (12) et communiquant avec l'enceinte étanche étant prévus pour contrôler depuis l'extérieur du joint la pression régnant dans cette anceinte.

2. Joint annulaire selon la revendication 1, caractérisé en ce que les faces métalliques (8, 9) sont des prolongements de l'enveloppe métallique (6).

3. Joint annulaire selon la revendication 1, caractérisé en ce que l'enveloppe métallique (6) comporte deux discontinuités (15, 16, fig. 4) de raccordement avec les faces métalliques planes (8, 9).

4. Joint selon l'une quelconque des revendications 1 à 3, caractérisé en ce que le ressort interne est associé à un jonc métallique interne (13, fig. 2) ou à une butée externe (14, fig. 3) limitant son écrasement.

5. Joint annulaire flexible selon l'une des revendications 1 à 3, caractérisé en ce que les moyens (18) traversant l'anneau (12) en élastomère comportent au moins un tube capillaire transversal (18), traversant également un épanouissement (10) d'une (8) des faces planes (8, 9), ledit tube capillaire (18) débouchant dans une lumière (23) ménagée dans lesdites faces (8, 9) et communiquant avec l'enceinte étanche de contrôle de l'étanchéité du joint.

6. Joint selon la revendication 5, caractérisé en ce que le tube capillaire (18) traverse sensiblement diamétralement l'anneau plastique (12) à travers un perçage dont le diamètre est inférieur à celui du tube.

7. Joint selon la revendication 6, caractérisé en ce que le tube capillaire (18) est solidarisé de l'épanouissement (10) qu'il traverse par un point de soudure (20).

8. Joint selon la revendication 5, caractérisé en ce que le tube capillaire (18) est raccordé à son extrémité opposée (24), à l'extérieur du joint, à un appareil de contrôle et/ou de mesure.

## Patentansprüche

1. Elastische Ringdichtung aus Metall und Kunststoff mit einer inneren Seele (5), die aus einer metallischen Feder mit aneinanderliegenden Windungen gebildet und in sich geschlossen ist, mit kreisförmigem Querschnitt, die wenigstens teilweise von zwei aufeinanderfolgenden Hüllen, nämlich einer ersten metallischen, nichtduktilen Hülle (6), in der die Feder (5) eingefaßt ist, und einer zweiten metallischen, duktilen, um die erste gelegne Hülle (7), umgeben ist, dadurch gekennzeichnet, daß sie außerdem einen zur inneren Seele (5) koaxialen massiven Kunststoffring (12) aus Elastomer aufweist, der mit dieser durch zwei ebene und parallele metallische Flächen (8, 9) verbunden ist, die sich in der Äquatorialquersymmetrieebene der Dichtung erstrecken und Endenerweiterungen aufweisen, die teilweise den Kunststoffring (12) und wenigstens teilweise die Seele (5) derart umgeben, daß zwischen dem Ring (12) und der Seele (5) bei ihrer Anbringung zwischen zwei abzudichtenden Teilen (2, 3) ein dichter Raum geringen Volumens gebildet wird, der zur Steuerung der Dichtheit der Dichtung brauchbar ist, wobei den Ring (12) aus Elastomer durchsetzende und mit dem dichten Raum verbundene Mittel (18) zur Steuerung des in diesem Raum herrschenden Drucks von außerhalb der Dichtung aus vorgesehen sind.

2. Ringdichtung nach Anspruch 1, dadurch gekennzeichnet, daß die metallischen Flächen (8, 9) Verlängerungen der metallischen Hülle (6) sind.

3. Ringdichtung nach Anspruch 1, dadurch gekennzeichnet, daß die metallische Hülle (6) zwei Durchbrüche (15, 16, Fig. 4) zur Verbindung mit den ebenen metallischen Flächen (8, 9) aufweist.

4. Ringdichtung nach irgendeinem der Ansprüche 1 — 3, daduch gekennzeichnet, daß die innere Feder mit einem inneren metallischen Ring (13, Fig. 2) oder einem äußeren Anschlag 14, (Fig. 3) vereinigt ist, der ihre Zusammendrückung begrenzt.

5. Elastische Ringdichtung nach einem der Ansprüche 1—3, dadurch gekennzeichnet, daß die den Ring (12) aus Elastomer durch-setzenden Mittel wenigstens ein quer-verlaufendes Kapillarrohr (18) aufweisen, das gleichfalls eine Erweiterung (10) einer (8) der ebenen Flächen (8, 9) durchsetzt, wobei dieses Kapillarrohr (18) in einer Öffnung (23) mündet, die in diesen Flächen (8, 9) ausgebildet ist, und mit dem dichten Raum zur Steuerung der Dichtheit der Dichtung verbunden ist.

6. Dichtung nach Anspruch 5, dadurch gekennzeichnet, daß das Kapillarrohr (18) den Kunststoffring (12) durch eine Bohrung im wesentlichen diametral durchquert, deren Durchmesser geringfügig kleiner als derjenige des Rohres ist.

7. Dichtung nach Anspruch 6, dadurch gekennzeichnet, daß das Kapillarrohr (18) an der von ihm durchquerten Erweiterung (10) durch einen Schweißpunkt (20) befestigt ist.

8. Dichtung nach Anspruch 5, dadurch gekennzeichnet, daß das Kapillarrohr (18) an seinem außerhalb der Dichtung gelegenen entgegengesetzten Ende (24) mit einer Kontroll- und/oder Meßvorrichtung verbunden ist.

## Claims

1. Flexible metalloplastic sealing ring comprising an internal core (5) formed from a helically-wound metallic spring whose ends are joined together, having a circular cross section surrounded at least partially by two successive metallic envelopes, namely a first non-ductile metallic envelope (6) enclosing the spring (5) and a second ductile metallic envelope (7) situated around the first envelope, characterized in that it also comprises a solid elastomeric plastics annulus (12) coaxial with the internal core (5) and joined thereto by two planar, parallel, metallic webs (8, 9) extending in the transverse equatorial plane of symmetry of the sealing ring and splayed out at their ends to surround partially the annulus (12) and at least partially the core (5), so as to form between the annulus (12) and the core (5) when placed between two members (2, 3) to be joined a gas-tight enclosure of low-volume usable for controlling the tightness of the joint, and means (18) traversing the elastomeric annulus (12) and communicating with the gas-tight enclosure to control from outside the joint the pressure obtaining in the enclosure.

2. Sealing ring according to Claim 1 characterized in that the metallic webs (8, 9) are prolongations of the metallic envelope (6).

3. Sealing ring according to Claim characterized in that there are two discontinuities (15, 16, Fig. 4) at the junction of the metallic envelope (6) and the planar metallic webs (8, 9).

4. Sealing ring according to any one of Claims 1 to 3 characterized in that the spring (5) is associated with a metallic internal ring (13, Fig. 2) or an external stop (14, Fig. 3) limiting its collapsibility.

5. Flexible sealing ring according to any one of Claims 1 to 3 characterized in that the means (18) traversing the elastomeric annulus (12) comprise at least one transverse capillary tube (18) traversing also a splayed-out portion (10) of one (8) of the planar webs (8, 9), the said capillary tube (18) opening into an aperture (23) provided in the said webs (8, 9) and communicating with the gas-tight enclosure to control the tightness of the joint

6. Sealing ring according to Claim 5 characterized in that the capillary tube (18) traverses the plastics annulus (12) substantially diametrally in a bore whose diameter is less than that of the tube.

7. Sealing ring according to Claim 6 characterized in that the capillary tube (18) is fixed by spot-welding to the splayed out portion (10) that it traverses.

8. Sealing ring according to Claim 5 characterized in that the capillary tube (18) is connected at its opposite end at the exterior of the joint to a control and/or measurement apparatus.

FIG. 1

FIG. 2

FIG. 3

FIG. 4

FIG. 5

FIG. 6